# EUROPEAN PATENT APPLICATION

(11) **EP 4 418 563 A1**
(43) Date of publication of application: **21.08.2024**
(21) Application number: 23157164.7
(22) Date of filing: 17.02.2023
(51) Int. Cl.: H04B 7/185

(54) **REDUCTION OF OVERHEAD FOR NEIGHBOR CELL SIGNALING IN NON-TERRESTRIAL NETWORKS**

(71) Applicant: Panasonic Intellectual Property Corporation of America, Torrance, CA 90504 (US)
(72) Inventor: HERRMANN, Frank, 63225 Langen (DE); SUZUKI, Hidetoshi, Osaka, 571-8501 (JP); NISHIO, Akihiko, Osaka, 571-8501 (JP); KLENNER, Peter, 63225 Langen (DE)
(74) Representative: Grünecker Patent- und Rechtsanwälte PartG mbB

(57) **Abstract**

An embodiment provides a user equipment, UE, comprising a transceiver that, in operation, receives system information; and circuitry that, in operation, determines, from the system information, a first information element specifying a configuration parameter of a first satellite, and determines, from the system information and with reference to the configuration parameter of the first satellite, a second information element specifying the configuration parameter of a second satellite different from the first satellite. The corresponding base station and the methods including steps performed at a UE and the base station are also provided.

## Description

### 1. Technical Field

The present disclosure relates to transmission of system information relating to a non-terrestrial network. In particular, the present invention relates to apparatuses and methods that generate, signal, receive, and/or utilize the system information relating to a non-terrestrial network.

### 2. Description of the Related Art

Currently, the 3rd Generation Partnership Project (3GPP) has been working on the technical specifications for the next generation cellular technology, which is also called fifth generation (5G) or new radio (NR).

One objective is to provide a single technical framework addressing all usage scenarios, requirements and deployment scenarios, at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

One notable feature of 5G is the introduction of non-terrestrial networks (NTN) including a satellite in the communication path between a user device and a network. Thanks to the wide service coverage capabilities and reduced vulnerability of space or airborne vehicles to physical attacks and natural disasters, NTNs may foster the rollout of NR service in unserved areas that cannot be covered by terrestrial NR networks (for instance isolated or remote areas, on board aircraft or vessels) and unserved (for instance suburban and rural areas). Further, NTNs may reinforce NR service reliability by providing service continuity for passengers on moving platforms or ensuring service availability anywhere, especially for critical communication.

The benefits relate to either non-terrestrial networks operating alone or to integrated terrestrial and non-terrestrial networks, which may impact coverage, user bandwidth, system capacity, service reliability or availability. Further improvements of the NTN are desirable in order to increase coverage and efficiency of the communications system.

### SUMMARY

One non-limiting and exemplary embodiment facilitates efficient transmission and reception of system information relating to a non-terrestrial network.

In an embodiment, the techniques disclosed herein feature a user equipment, UE, comprising: a transceiver that, in operation, receives system information; and circuitry that, in operation, determines, from the system information, a first information element specifying a configuration parameter of a first satellite, and determines, from the system information and with reference to the configuration parameter of the first satellite, a second information element specifying the configuration parameter of a second satellite different from the first satellite

It should be noted that general or specific embodiments may be implemented as a system, a method, an integrated circuit, a computer program, a storage medium, or any selective combination thereof. For instance, an integrated circuit can control a process of a UE or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: is a block diagram that shows an exemplary architecture for a 3GPP NR system.
- **Fig. 2**: is a block diagram that shows a functional split between NG-RAN and 5GC.
- **Fig. 3**: is a message sequence diagram for RRC connection setup/reconfiguration procedures.
- **Fig. 4**: is a schematic drawing showing usage scenarios of Enhanced mobile broadband (eMBB), Massive Machine Type Communications (mMTC) and Ultra Reliable and Low Latency Communications (URLLC).
- **Fig. 5**: is a block diagram showing an exemplary 5G system architecture for a non-roaming scenario.
- **Fig. 6**: is a block diagram that illustrates an exemplary NG RAN architecture based on a transparent satellite.
- **Fig. 7**: is a block diagram that illustrates an exemplary NG RAN architecture based on a regenerative satellite.
- **Fig. 8**: is a block diagram that illustrates an exemplary scenario where several UEs are served by a satellite.
- **Fig. 9**: is a schematic drawing that illustrates an exemplary scenario of a satellite orbiting the Earth.
- **Fig. 10**: is a schematic drawing that illustrates orbital parameters that may be used to describe a position of a satellite.
- **Fig. 11**: is a schematic drawing that illustrates an exemplary satellite network with a regular distribution of satellites in their orbits and of the satellite orbits.
- **Fig. 12**: is a block diagram that illustrates structure of a UE and a BS that may be in communication with each other.
- **Fig. 13**: is a block diagram that illustrates functional structure of a memory module that includes code instructions for being executed by a circuitry including one or more processors for UE and BS.
- **Fig. 14**: is a schematic drawing that illustrates an exemplary scenario in which two satellites on a common orbit are to be described by system information.
- **Fig. 15**: is a schematic drawing that illustrates an exemplary scenario of two neighboring orbits that are to be described by system information.
- **Fig. 16**: is a schematic drawing that illustrates an exemplary scenario in which a plurality of satellites orbiting at neighboring orbits is to be described in system information.
- **Fig. 17**: is a schematic drawing that illustrates an exemplary scenario of a plurality of equally distributed satellites of which position is to be described in system information.
- **Fig. 18**: is a flow diagram that illustrates a method for being performed at a UE side.
- **Fig. 19**: is a flow diagram that illustrates a method for being performed at a BS side.
- **Fig. 20**: is a flow diagram that illustrates an exemplary method for being performed at a UE side.

### DETAILED DESCRIPTION

### 5G NR system architecture and protocol stacks

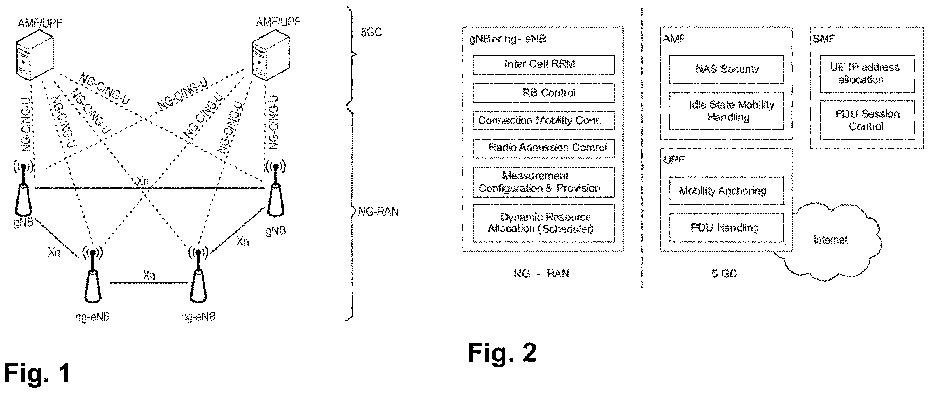

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.3.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.3.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

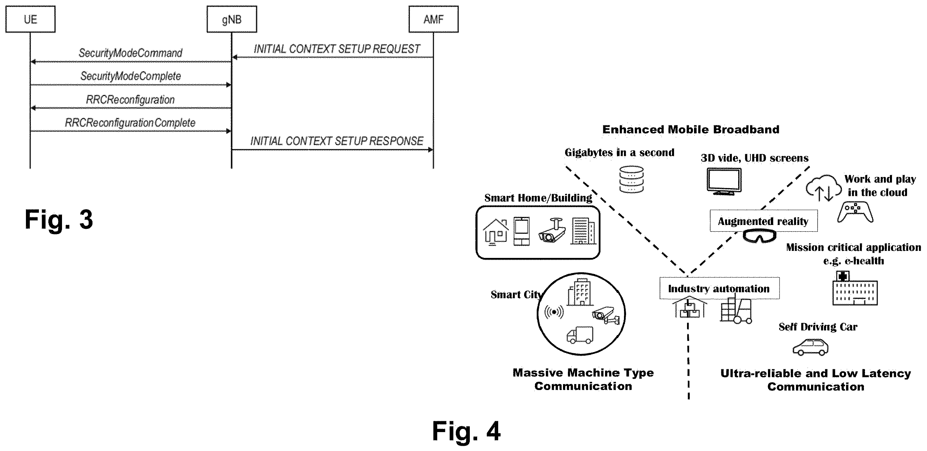

**Fig. 3** illustrates some interactions between a UE, gNB, and AMF (a 5GC entity) in the context of a transition of the UE from RRC_IDLE to RRC_CONNECTED for the NAS part (see TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNB, and a transmitter which, in operation, transmits an initial context setup message, via the NG connection, to the gNB to cause a signaling radio bearer setup between the gNB and a user equipment (UE). In particular, the gNB transmits a Radio Resource Control, RRC, signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

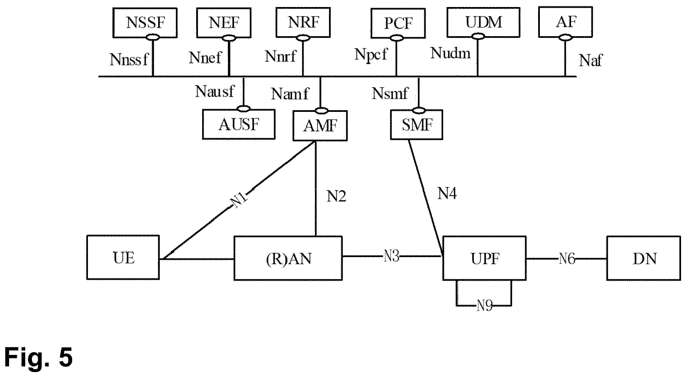

**Fig. 5** illustrates a 5G NR non-roaming reference architecture (see TS 23.501 v16.6.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNB and a UE in accordance with the QoS requirement and control circuitry, which, in operation, performs the services using the established PDU session.

### System information transmission

System information is downlink broadcast information transmitted by a base station (gNB in 5G, in general a network node). It includes information for a UE to establish connection with the base station. In 5G, UE reads system information for cell camping when it is powered on, for cell selection and re-selection when it is in RRC_IDLE mode. System information provides all necessary details such as system frame number, system bandwidth, PLMN, cell selection and re-selection thresholds etc. to access the network.

System information is structured in a Master Information Block (MIB) and System Information Blocks (SIBs). SIBs accommodate various information. For the present disclosure of relevance may be information related to NTN transmission as will be described below. The MIB information is transmitted (broadcasted) via BCH and PBCH channels while SIBs are transmitted via DL-SCH and PDSCH channels.

In general, system information may be transmitted periodically (so that the newly connecting terminals may obtain it) or on demand. The periodic schedule of system information transmission is configurable by RRC. In particular, a SIB1 (which is referred to by MIB) carries scheduling information which specifies e.g. the system information window (repetition period of the system information transmission pattern), some transmission parameters (e.g. physical layer parameters) to receive the system information, and the mapping (transmission pattern) of the SIBs within the system information window.

### Non-Terrestrial Networks, NTN

A non-terrestrial network refers to a network, or segment of a network using RF resources on board of an airborne or space-borne entity for transmission. Space-borne vehicles are for instance satellites (including Low Earth Orbiting (LEO) satellites, Medium Earth Orbiting (MEO) satellites, Geostationary Earth Orbiting (GEO) satellites as well as Highly Elliptical Orbiting (HEO) satellites). Airborne vehicles are for instance High Altitude Platforms (HAPs) encompassing Unmanned Aircraft Systems (UAS) including Lighter than Air UAS (LTA), Heavier than Air UAS (HTA), all operating in altitudes typically between 8 and 50 km, quasi-stationary.

In 3GPP, NR-based operation in a non-terrestrial network (NTN) is studied and described (see e.g. 3GPP TR 38.811, "Study on New Radio (NR) to support non-terrestrial networks", version 15.4.0, and 3GPP TR 38.821, "Solutions for NR to support non-terrestrial networks", version 16.1.0).

NTNs typically feature the following system elements: an NTN terminal, which may refer to a 3GPP UE or a terminal specific to the satellite system in case a satellite does not serve directly 3GPP UEs; a service link which refers to the radio link between the user equipment and the space/airborne platform; an airborne platform embarking a payload; gateways that connect the space/airborne platform to the core network; feeder links which refer to the radio links between the gateway and space/airborne platform.

The platform can implement either transparent or regenerative payload transmissions. In the transparent payload, the platform acts as a repeater by filtering, converting, and amplifying the wave signal, while the payload is unchanged. In the regenerative payload, the platform has some or all of the base station functionalities. It may perform demodulation/modulation, switching/routing, coding/decoding in addition to radio frequency filtering, conversion and amplification. The Inter-satellite links (ISL) can optionally be used to form a constellation of satellites. ISL (Inter-Satellite Links) is a transport link between satellites.

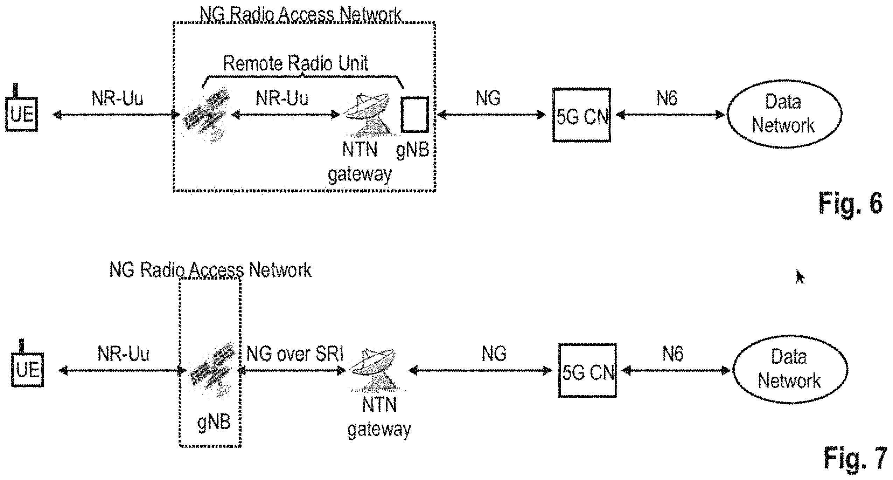

**Fig. 6** illustrates a scenario of a non-terrestrial network, wherein a transmission between a terminal (UE) is performed via a remote radio unit including a satellite and an NTN gateway. A gNB is located at the gateway as a scheduling device. The satellite payload implements frequency conversion and radiofrequency amplifier in both uplink and downlink direction. Hence, the satellite repeats the NR radio interface from the feeder link (between the NTN gateway and the satellite) to the service link (between the satellite and the UE) and vice versa. The Satellite Radio Interface (SRI) on the feeder link is the NR-Uu. In other words, the satellite does not terminate NR-Uu. A satellite in this configuration is referred to as a transparent satellite.

**Fig. 7** illustrates a scenario of a non-terrestrial network, wherein a transmission between a terminal (UE) is performed via a satellite including a gNB as a scheduling device. A satellite in this configuration is referred to as a regenerative satellite. According to one exemplary implementation (see TS 38.321 "NR; Medium Access Control (MAC) protocol specification", version 17.3.0, Section 5.2), the NG-RAN logical architecture as described in TS 38.401, "NG-RAN; Architecture description", version 17.3.0 is used as baseline for NTN scenarios. The satellite payload implements regeneration of the signals received from Earth. The NR-Uu radio interface is on the service link between the UE and the satellite. The Satellite Radio Interface (SRI) is on the feeder link between the NTN gateway and the satellite. SRI (Satellite Radio Interface) is a transport link between the NTN GW and satellite.

For LEO, MEO, and HEO satellites, which do not keep a their position fixed with respect to a given earth point, a satellite beam, which corresponds to a cell or PCI (Physical Cell ID) or to an SSB (Synchronization Signal Block) beam of the NR wireless system may be moving over the earth.

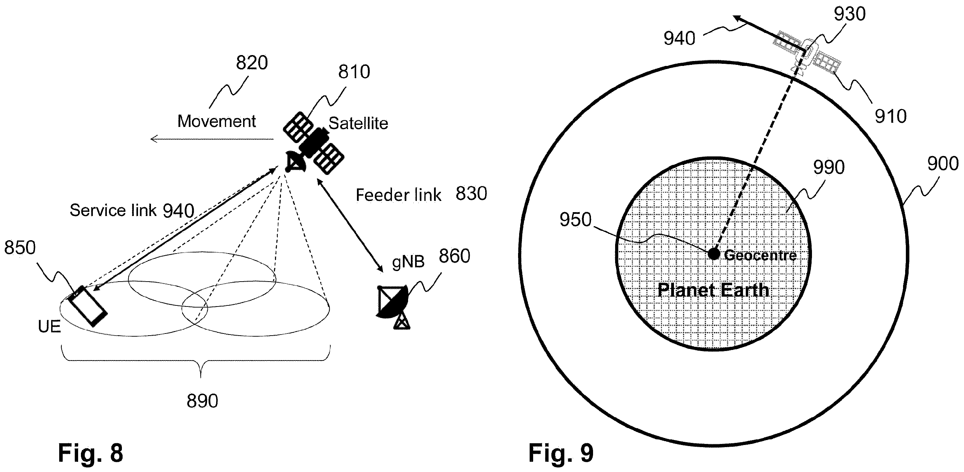

An NTN scenario that provides cells which are continuously moving on the Earth (e.g. a LEO, MEO, or HEO based NTN), is referred to as an earth moving cell scenario. The continuous cell motion on the Earth is due to the operation where the satellite beam is fixed with respect to the NTN platform. Therefore, the footprint of the cell, which may correspond to several satellite beams or one satellite beam, slides on the earth surface with the motion of the NTN platform (e.g. a LEO satellite). This is illustrated in **Fig. 8****.** A satellite 810 moves (illustrated by the movement arrow 820), e.g. with a velocity of 7.6 km/s. It may provide one or more cells (here three cells) 890. There is a service link 840 between a UE 850 and the satellite 810. System information, and, in particular, a system information block (SIB) carries NTN information, sometimes referred to as NTN-SIB. Currently, SIB19 carries NTN-information in 3GPP NTN-NR. The system information is broadcasted by the satellite 810. The present disclosure is not limited to any particular network configuration. In some communication systems that may still profit from the present disclosure, the satellite may be controlled to broadcast the system information by the gNB 860. There is a feeder link 830 delay between the satellite 810 and a gNB 860.

### Configuration of an NTN

In its current form, system information block 19 (SIB19) can provide information about a serving cell as well as information concerning neighboring cells of the serving cell as shown in 3GPP TS 38.331, "Radio Resource Control (RRC) protocol specification", version 17.3.0. The information may be broadcasted or communicated via dedicated signaling. An exemplary current portion of the SIB19 including information elements (IEs) and fields relevant for NTN neighboring cells as shown below.

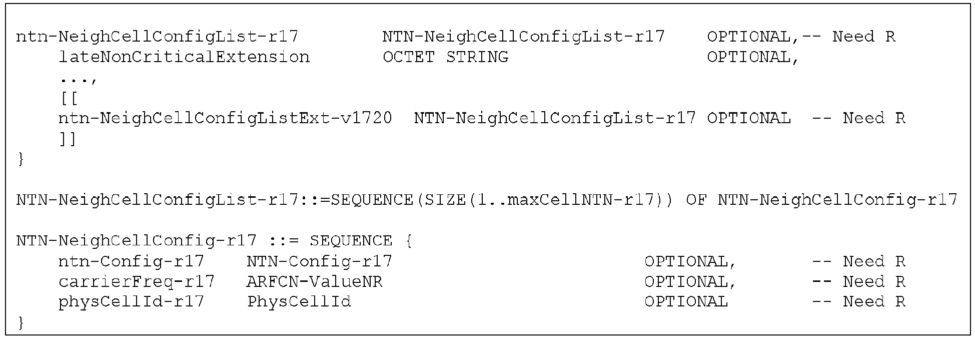

Herein, ntn-NeighCellConfigList and ntn-NeighCellConfigListExt provide a list of NTN neighbor cells including their ntn-Config, carrier frequency and PhysCellld (physical cell ID). ntn-Config provides parameters for the UE to access NR via NTN access such as ephemeris data, common timing advance (TA) parameters, k_offset, validity duration for UL sync information and epoch as shown below.

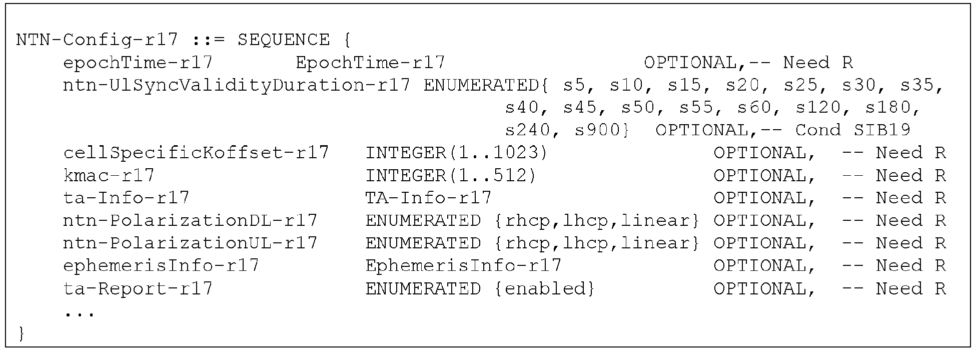

Information about the orbital trajectories of satellites are contained in ephemeris data (Ephemerislnfo). There are different possible representations of ephemeris data as is shown below, namely (i) the position and velocity data, and (ii) the orbital data. One of these representation is sufficient to determine the orbital trajectory of a satellite.

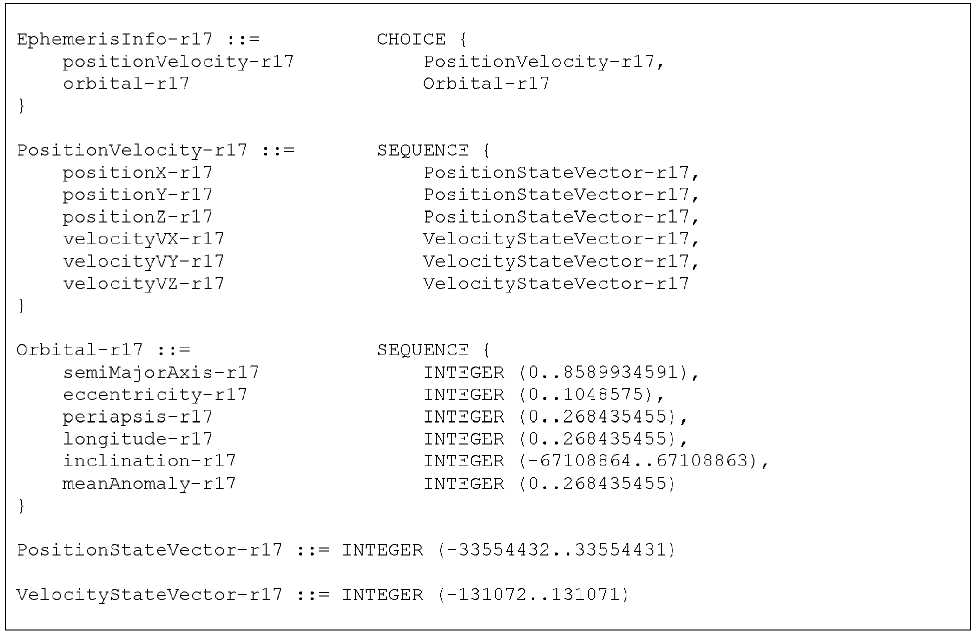

Coordinates of the satellite location (X, Y, Z) a velocity vector (VX, VY, VZ) together with a reference time (e.g. epoch time) specify the orbit as illustrated in Fig. 9. In particular, a satellite 910 orbits around the Earth 990 with geocentre 950 on an orbit 900. At a given reference time, the position 930 and the velocity 940 characterize the location of the satellite 910.

It is noted that the "-r17" suffixes of some lEs and fields in the above copied syntax merely indicate the release of the standard and are thus omitted herein in the text when referring to these lEs or fields. In further releases they may change to "-r18" or "-r19" or the like.

Alternative possibility is to use orbital parameters such as semi-major axis, eccentricity, inclination, right ascension of the ascending node (longitude of ascending node of orbit plane), argument of periapsis, mean anomaly at a reference point in time, and the epoch (e.g. the epoch time mentioned above). The first five parameters can determine an orbital plane (orbital plane parameters), and the other two parameters are used to determine exact satellite location at a reference time, e.g. epoch time (satellite level parameters).

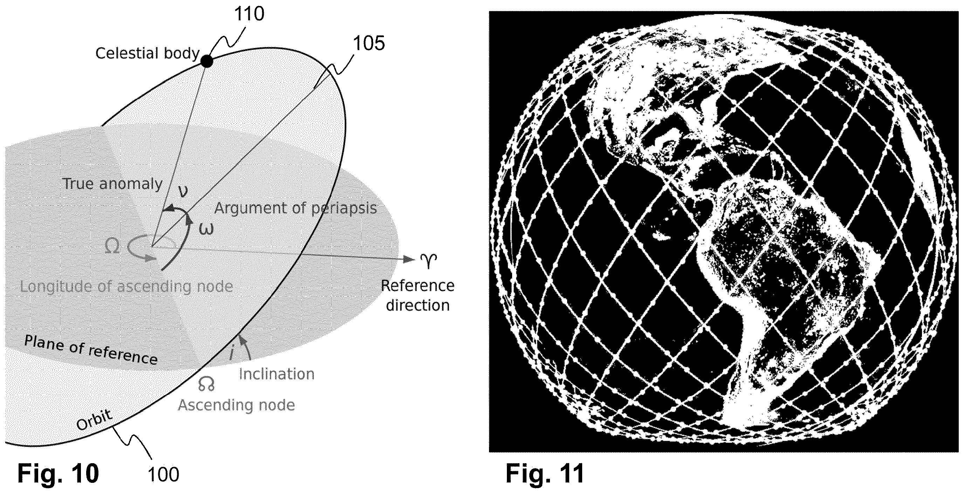

Fig. 10 illustrates a satellite 110 on an orbit 100. The orbit 100 is characterized by semi-major axis 105 (field "semiMajorAxis"), eccentricity (relation of the semi-major axis to the semi-minor axis, field "eccentricity"), inclination i (field "inclination"), longitude of ascending node of orbit plane Ω (field "longitude"), argument of periapsis ω (field "periapsis"), and anomaly v (field "meanAnomaly"). It is noted that the term "field" herein, when referring to 5G syntax and terminology, denotes elements of information (information elements) that are single parameters rather than containers of further information elements / fields.

In an NTN system, several satellites may share a common orbit. Fig. 11 show an exemplary distribution of satellites (white dots) on orbits (white lines) around the Earth. The orbits are arranged in such a manner that neighboring orbits are substantially parallel. In such satellite distribution, neighboring satellites often share several characteristics. Thus, some of ephemeris parameters may be same or very similar among the neighboring satellites. For example, some elements that are part of the IE ephemerislnfo-r17 of each neighboring cell may not always be required, because they would represent a repetition of information provided already in connection with the ephemerislnfo-r17 of a reference cell already. When referring to a "reference cell" herein, what is meant is any cell that is defined as reference for other cells. The serving cell may serve as a reference cell in some cases. However, the present disclosure is not limited in this respect and another cell may be defined as a reference cell.

### Signaling reduction

For example, in case of satellites in the same orbit, parameters within the positionVelocity sequence may be highly correlated. In particular, the velocity parameters may fully or partly be the same for all satellites in the same orbit. The positions of the satellites in the same orbit may be further defined e.g. by equal distribution within the orbit. Even satellites in neighboring orbits may have same or similar velocities and satellite distributions. Correspondingly, orbital parameters may be similar or same for the neighboring satellites, e.g. for satellites in the same orbit or in neighboring orbits. For instance, parameters defining the orbit such as the semi-major axis, eccentricity, inclination, longitude, and periapsis would be the same for satellites sharing the same orbit. Thus, it may be desirable to exploit the similarities of the ephemeris data of the neighboring satellites for reducing signaling overhead.

In order to facilitate signaling reduction in some embodiments, instead of the aforementioned redundant information, signaling for neighboring satellites can be restricted to an indication of a difference (or, in general, a relation) between the neighboring satellite attributes and the attributes of the reference satellite.

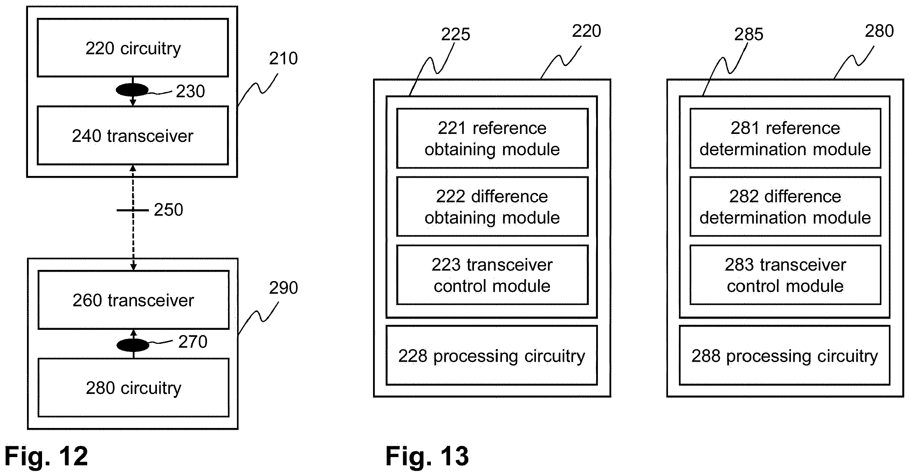

Fig. 12 illustrates an exemplary user equipment (UE) 210. The UE 210 comprises a transceiver 240 and circuitry 220 interconnected over an interface 230. The transceiver 240 is configured to receive system information. The transceiver 240 may receive the system information via broadcast or via dedicated signaling. The system information in this context is information about the system infrastructure, its configuration and/or resources. More specifically, the system information may comprise, similarly as in the 5G NR, RRC protocol information elements (lEs). The circuitry 220 is configured to determine, from the system information, a first information element specifying a configuration parameter of a first satellite.

The circuitry 220 is configured further to determine, from the system information and with reference to the configuration parameter of the first satellite, a second information element specifying the configuration parameter of a second satellite different from the first satellite.

The first satellite may be seen as a reference satellite, since its configuration parameters serve as a reference for configuration parameters of another (second) satellite. The first and the second satellites may be neighboring satellites. The term neighboring satellites denotes satellites that operate cells that are adjacent to the cell or cells operated by the reference satellite. For example, neighboring satellites may be satellites immediately preceding and following the reference satellite in the same orbit and/or satellites on the two (immediately) adjacent orbits. However, the present disclosure is not limited to the first and the second satellites being adjacent. Rather, the benefit of reduced signaling overhead may be achieved also for satellites not adjacent to the reference satellite. For example, as already mentioned above, satellites of the same orbit, although not all adjacent to a reference satellite, may share the majority of parameters, e.g. all parameters describing the orbit.

Since the system information defines serving cell and its parameters including the position and/or orbit of the serving satellite that operates (provides) the serving cell, the serving satellite may be the reference satellite. However, the present disclosure is not limited to the reference satellite being the serving satellite. In some embodiments, an information element specifying which satellite is the reference satellite may be included into the system information carrying the neighboring satellite information. Alternatively or in addition, the reference satellite may be determined according to a predetermined rule such as taking, for a particular satellite, as a reference satellite a satellite preceding said particular satellite in the same orbit or according to a similar rule.

Fig. 12 further shows a base station, BS 290. The base station comprises a transceiver 260 and circuitry 280 interconnected over an interface 270. The transceiver 260 is configured to transmit system information. The circuitry 280 is configured to generate the system information. The generating of the system information comprises including into the system information a first information element specifying a configuration parameter of a first satellite and including into the system information a second information element. The generating of the system information further comprises determining, with reference to the configuration parameter of the first satellite, the second information element specifying the configuration parameter of a second satellite different from the first satellite.

It is noted that the term "a configuration parameter" means one or more configuration parameters, i.e. at least one configuration parameter. In general, the term "information element" refers to an element of a protocol syntax (such as the RRC protocol exemplified above) which may but does not have to encapsulate further information elements. In the same context, the term "field" refers to a single parameter provided within the structure of a "sequence" and/or an "information element". The first satellite and the second satellite are satellites that provide cellular coverage. In particular, the first satellite as well as the second satellite operates at least one cell of a radio access network. The UE 210 may use the first satellite and/or the second satellite to access a communication network such as 5G NR. The base station 290 may be directly located in the serving satellite or control the serving satellite as discussed above with reference to Figs. 6 and 7. In the context of 5G NR, the base station may be the gNB. The present disclosure is readily applicable to the 5G NR system, but not limited thereto. Any current or future communication systems that employ at least two satellites may benefit from the present disclosure.

As shown in Fig. 12, the UE 210 and the BS 290 may communicate via a channel 250. In particular, the BS 290 may transmit the system information to the UE 210 over the channel 250 which may include a wireless channel between a satellite and a the UE.

A transceiver (such as the transceiver of the UE 240 and the transceiver 260 of the BS) may be any receiver and/or transmitter including, for example, one or more antennas and the corresponding amplifier(s) and a modulator / demodulator (for up-conversion to / down-conversion form the system carrier). The transceiver may be controlled by a control module to perform transmission and/or reception of particular data with particular timing and in particular resources. Such control module may be part of the circuitry 220, 280.

The circuitry (such as the circuitry of the UE 220 and the circuitry 280 of the BS) may include one or more processors, one or more memory modules, one or more pieces of programmable hardware or application specific hardware, and/or some further electronics elements.

For example, as shown in Fig. 13 for the BS 290, the circuitry 280 may comprise processing circuitry 288 and memory circuitry 285. The processing circuitry 288 may be controlled by a program code stored in the memory circuitry 285. The program code may include functional modules 281, 282, 283 that configure the processing circuitry 288 to perform the above mentioned BS functionality. In particular, reference determination module 281 configures the processing circuitry to determine and include into the system information the first information element specifying the configuration parameter of the first satellite whereas the difference determination module 282 determines and includes into the system information the second information element. The transceiver control module 283 controls the transceiver 260 over an interface 270 to transmit the system information in the resources scheduled for its transmission; e.g. the transceiver control module 283 outputs to the transceiver 260 the system information to be transmitted. It is noted that the memory circuitry 285 may include further modules that implement further functions of the BS 290.

For example, as shown in Fig. 13 for the UE 210, the circuitry 220 may comprise processing circuitry 228 and memory circuitry 225. The processing circuitry 228 may be controlled by a program code stored in the memory circuitry 225. The program code may include functional modules 221, 222, 223 that configure the processing circuitry 228 to perform the above mentioned UE functionality. In particular, reference obtaining module 221 configures the processing circuitry to obtain from the system information the first information element specifying the configuration parameter of the first satellite whereas the difference obtaining module 222 obtains from the system information the second information element and determines the configuration of the second satellite accordingly. The transceiver control module 223 controls the transceiver 240 over an interface 230 to receive the system information in the resources scheduled for its transmission; e.g. the transceiver control module 223 receives from the transceiver 240 the received signal including the system information. It is noted that the memory circuitry 225 may include further modules that implement further functions of the UE 210.

The memory circuitry may be on chip with the processing circuitry or integrated within one or more chips separate from the processing circuitry integration.

Once the one or more configuration parameters referring to a second satellite are determined from the system information, they may be used in the UE for performing a decision on whether to handover or not to a particular neighboring cell such as a cell operated (illuminated) by the second satellite.

In the following some exemplary implementations of the above mentioned signaling of parameter(s) for one satellite (second satellite) referring to another satellite (the first satellite) are described.

The signaling referring to a reference satellite may be implemented in that the second information element specifies a difference between the configuration parameter of the first satellite and the configuration parameter of the second satellite.

Signaling of difference rather than the full configuration of the second satellite provides possibility to reduce the signaling overhead. For example, parameters that have a zero difference (are the same for the first satellite and the second satellite) do not need to be included into the configuration IE of the second satellite. Instead, a flag may be included into the system information (e.g. into a container IE carrying the configuration of the second satellite) specifying for certain parameters that they are not included which corresponds to the notion that they are the same as the corresponding parameters of the first (reference satellite). Other IE structures are possible. For example, depending on whether or not the second satellite is in the same orbit as the first satellite (which may be indicated as a flag field), the lEs and fields to be included into the system information may be determined. In addition or alternatively, signaling reduction may be achieved if the difference field has a value range smaller than the value range of the full field.

### Signaling of position for a target satellite in the same orbit as a reference satellite

Signaling ephemeris data for satellites in the same orbit may be highly redundant as mentioned above, especially if the ephemeris data are signaled by way of the orbital data.

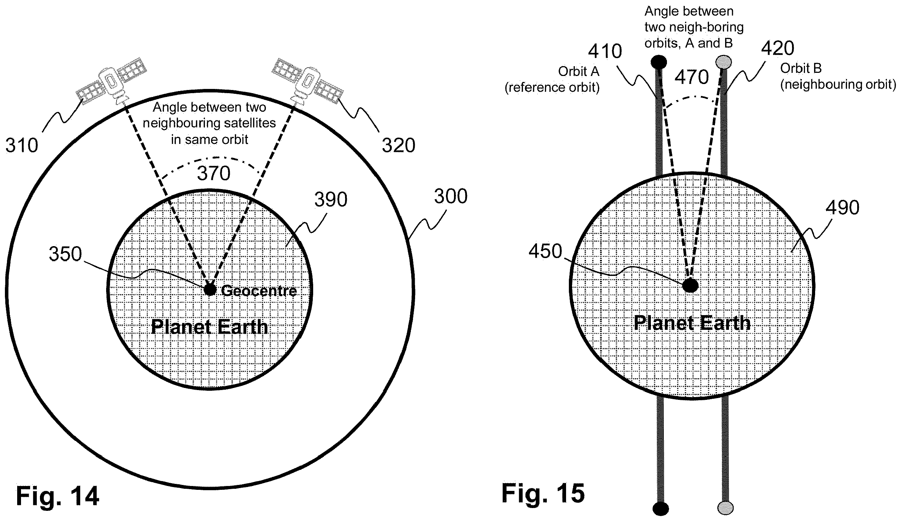

Fig. 14 illustrates a scenario in which a first (reference) satellite 310 and a second (target) satellite 320 share the same orbit 300 around the Earth 390 with the geocentre 350. Due to the sharing of the orbit 300, the only difference in position between the first satellite 310 and the second satellite 320 is an angle 370.

Accordingly, if the first satellite and the second satellite share the same orbit, the configuration parameter specifying a satellite position of the second satellite may be signaled by way of difference. In particular, the second information element includes a difference in angle between the first satellite and the second satellite with origin in geocentre.

In other words, distance between a reference satellite 310 and another satellite 320 in the same orbit can be efficiently expressed as the angle 370 anchored in the geocentre 350. Such field is herein exemplarily referred to as satToSatAngle-r18. The units and the range for signaling such angle 370 in satToSatAngle-r18 may be same as those of the field meanAnomaly-r17.

The field meanAnomaly-r17 is an integer with the value range from 0 to 268435455 mapped onto the angle values from 0 to 2π.

In Fig. 14, the satellites 310 and 320 are illustrated as neighboring satellites. However, this does not have to be so. One reference satellite may be used per orbit and position of any other satellite in the same orbit may be specified by way of the angle 370. The reference satellite may the serving satellite. In practical implementations, the system information provided by the serving satellite will likely include only satellites in the proximity of the serving cell, which would be the neighboring satellites. However, the present disclosure is not limited to such scenarios and the signaling is also applicable for satellites not immediately adjacent to the serving or reference satellite.

In particular, especially if all satellites of the same orbit are equidistantly positioned, the difference signaling may be particularly efficient. A currently existing example for such distribution may be the Starlink satellite network, at least in some areas.

Signaling the difference angle 370 for satellites in the same orbit may be sufficient as the only parameter of the orbital information Orbital. Moreover, with further assumptions regarding the position of the reference satellite, the value range of the satToSatAngle parameter may be reduced.

### Signaling for a target satellite in an orbit different from the orbit of a reference satellite

Even for satellites in different orbits, signaling redundancy may be further by indicating a target orbit relative to a reference orbit. Such example is shown in Fig. 15.

Fig. 15 shows two orbits namely orbit A 410 and orbit B 420 which are shown as neighboring and substantially parallel orbits in Fig. 15. In this example, the orbit A 410 is the reference orbit and the orbit B 420 is the target orbit (to be described with reference to the reference orbit). Both orbits A and B are orbits around the Earth 490. When it is assumed that the orbits are "quasi-parallel" or substantially parallel within the coverage area extending over cells of several neighboring satellites, then the position of the first (target) orbit A 410 may be indicated relative to the second (reference) orbit B 420 by way of an orbit to orbit angle 470. Thus, instead of signaling all five parameters defining the orbit as in the sequence Orbital above (the semi-major axis, eccentricity, inclination, longitude, and periapsis), only a single parameter, namely the orbit to orbit angle may be signaled.

In particular, a UE that receives a system information may receive the second field that includes a difference in angle between the first orbit 410 and the second orbit 420 with origin in geocentre 450. This may be suitable in particular in cases in which the first satellite is in a first orbit and the second satellite is in a second orbit different from the first orbit and parallel to the first orbit, wherein the orbit 420 specification is a part of specifying the position of the second satellite.

The BS transmits the corresponding second field, which may be exemplarily referred herein to as orbitToOrbitAngle or orbitToOrbitAngle-r18. The distance orbitToOrbitAngle between the reference orbit 410 and the target orbit 420 expressed as the angle 470 with the geocentre 450 as anchor point may have the same unit and range as the above-mentioned meanAnomaly-r17.

Such signaling may be particularly suitable (but not limited to) for target orbits belonging to the same network because the system then has a full control and knowledge of the orbits. The reference orbit 410 and the target orbit 420 are not necessarily neighboring each other.

It is noted that the orbit to orbit angle 470 signaling indicates the relative positions of the orbits 410 and 420. Still, signaling of the target satellite position within the target orbit 420 may be desirable. As mentioned above, the position of a target satellite may be determined relative to a reference satellite within the same orbit 420. Alternatively, the positon of a target satellite may be determined relative to a reference satellite in the reference orbit 410 as will be illustrated in the following example.

It is noted that when referring herein to "parallel" or "substantially parallel" or "quasi-parallel", what is meant is that the orbits can be considered as parallel at least in the region covered by the cells operated by the reference satellite and the cells operated by the target satellite, i.e. in the area in which the UE is currently located and/or moving and thus receiving the system information. It is not necessary that the entire orbits (full circle / ellipse) 410 and 420 are parallel to each other.

### Signaling phase difference between a target satellite and a reference satellite in different orbits

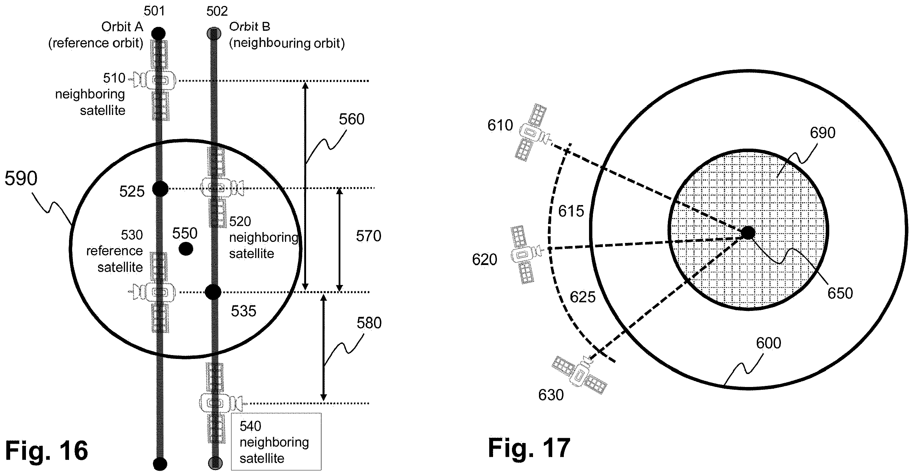

Fig. 16 illustrates four satellites 510, 520, 530, and 540. Satellites 510 and 530 are located in a first orbit 501 (also referred to as Orbit A or reference orbit) whereas satellites 520 and 540 are located in a second orbit 502 (also referred to as Orbit B or target orbit or neighboring orbit) around the Earth 590. Fig. 16 shows phase shifts 560, 570, and 580 between the neighboring satellites 510, 520, and 540 in the neighboring orbit B 502 and a reference satellite 530 in the reference orbit A 501.

As can be seen, for example, a first (reference) satellite 530 is in a first orbit 501 and the second (target) satellite 520 is in a second orbit 502 substantially parallel with the first orbit 501 at least within the coverage of the first satellite and the second satellite. In this example, the second information element specifying the position of the second satellite 520 includes a difference 570 in phase between the first satellite 530 in the first orbit 501 and a position 525 corresponding to orthogonal projection of the position of the second satellite 520 in the second orbit 502 onto the first orbit 501. This corresponds to a case in which the second information element specifying the position of the second satellite 520 includes a difference (same as 570 mentioned above if the two orbits A and B are parallel) in phase between the second satellite 520 in the second orbit 502 and a position 535 corresponding to orthogonal projection of the position of the first satellite 530 in the first orbit 501 onto the second orbit 502.

When referring herein to a position obtained by orthogonal projection of a satellite position into another orbit, what is meant is a position in the other orbit at a shortest distance from the satellite position.

As can be seen in Fig. 16, the phase difference (phase shift) 580 between the reference satellite 530 and another neighboring satellite 540 may be signaled in a similar manner as the above mentioned phase difference (phase shift) 570 between the reference satellite 530 and the neighboring satellite 520. Phase difference 560 between the reference satellite 530 and another satellite 510 within the same orbit 501 may be signaled by way of the satellite to satellite angle as described above with reference to Fig. 14.

In summary, a phase shift of a satellite 520, 540 in a neighbouring orbit 502 may be signaled with reference to a reference satellite 530 in a reference orbit 501, i.e. it may be expressed as an angle (570, 580) with the geocentre 550 as the anchor point. The corresponding field may be exemplarily referred to as phaseShiftAngle-r18 or in general as phaseShiftAngle. The phaseShiftAngle may have the same unit and range as those of the field meanAnomaly-r17 mentioned above.

If phase shifts are constant between a reference satellite 530 and all neighboring satellites 520 and 540 of a neighboring orbit (or even in both neighboring orbits), then a single indication of the phase difference may suffice.

An exemplary syntax for ephemeris orbital data indicated for a target satellite with reference to a reference satellite (i.e. the serving satellite or otherwise determined reference) is shown below.

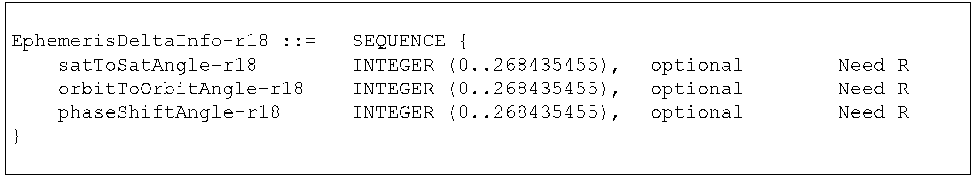

In particular, Ephemeris Delta Info represents the second IE. The second IE builds an alternative to providing the IE Ephemerislnfo for neighboring satellites. It is noted that this example is only exemplary. The fields satToSatAngle, orbitToOrbitAngle and phaseShiftAngle are optional. For example, if only satToSatAngle is signaled (without orbitToOrbitAngle and phaseShiftAngle), it may indicate that the neighboring satellite is on the same orbit as the reference satellite. If orbitToOrbitAngle and phaseShiftAngle are signaled, the neighboring satellite is located in an orbit different from the orbit of the reference satellite, and satToSatAngle may not be necessary.

Within the same orbit, angle between a reference satellite and a neighboring satellite (anchor for that angle indication is the geocentre) may be signaled as satToSatAngle-r18. For satellites in different orbits, an angle between a reference orbit (the orbit the reference satellite is in) and a neighboring orbit may be indicated as orbitToOrbitAngle-r18, and a phase shift between the reference satellite in the reference orbit and a neighboring satellite in the neighboring orbit may be signaled as phaseShiftAngle-r18.

### Signaling type of relation between satellites

In the preceding embodiments, one or more parameters specifying position of a second satellite were signaled with reference to corresponding parameters of a first satellite and in particular by way of a difference. However, the present disclosure is not limited to signaling a difference. Since various parameters of the second satellite may be same as parameters of the first satellite, it may be advantageous to signal identity of parameters.

For example, the second information element includes an indication specifying that the configuration parameter of the first satellite is the same as the configuration parameter of the second satellite. The indication may a Boolean field, which may be referred to as a flag. A Boolean field has a binary value range and may thus be signaled more efficiently than values from a larger value ranges, such as an angle difference mentioned above with reference to field meanAnomaly-r17 which is an integer from the range 0..268435455. For example, signaling whether or not a parameter of the second satellite is same as the parameter of the first satellite can be performed by 1 bit.

By indicating the above mentioned angles (e.g. satellite to satellite angle 370, orbit to orbit angle 470 and/or phase differences 570 or 580) the remaining parameters are derivable for the UE, such as the speed of the second satellite which may be for instance assumed the same as the speed of the first satellite For example, a satellite speed in an orbit is typically given as a square root of Gravitation Constant * Mass of Earth / orbit radius (measured from the geocentre). Hence, as long as the orbits are of the same altitude, the speed of the satellites would remain the same - in the reference orbit and in neighboring orbits.

In some non-limiting exemplary implementations of identity signaling, the indication specifies at least one of:
a) that an angle between two neighboring satellites in the same orbit is the same as an angle between the first satellite and the second satellite which are in the same orbit and neighboring;
b) that an angle between two neighboring orbits is the same as an angle between a first orbit of the first satellite and a neighboring orbit of the second satellite; and
c) that a phase shift (phase difference) between two satellites in one orbit is twice as large as a phase shift (phase difference) between the first satellite in an orbit neighboring to the one orbit and a satellite closest to said first satellite in the one orbit.

For example, a) may be beneficial in case in which the satellites are distributed around the Earth uniformly at least from the point of view of an area covered by the serving satellite and its neighboring satellites or satellites that operate neighboring cells to the cell(s) operated by the serving satellite. Then, even the difference in angle (e.g. the above satToSatAngle or phaseShiftAngle) do not need to be signaled for each neighboring (or in general target) satellite, but rather only for one of the neighboring satellites. For the remaining neighboring satellites, the identity indication a) may be provided. This is illustrated in Fig. 17. In particular, the angle 625 between the satellites 620 and 630 is the same orbit 600 is the same as the angle 615 between the reference satellite (here exemplarily the satellite 610) and the satellite 620. Thus, the satToSatAngle parameter may be signaled for the satellite 620, referring to the reference satellite 610 and indicating the angle 615. Moreover, an identity indication may be signaled for the satellite 630, indicating that the angle 625 is the same as the angle 615. For example, the reference satellite 610 may be the serving satellite and the satellite 620 may be determined, e.g., by default as the first in the list of neighboring satellites. Further examples are conceivable: for example, other than the first satellite in the list of neighboring satellites may be selected as default, or the reference satellite 610 and/or the satellite 620 may be configurable or the like.

Similarly, in case of identity b), an orbit to orbit angle 470 as discussed with reference to Fig. 15 may be signaled for one neighboring orbit. Then, for further neighboring pairs of (quasi-)parallel orbits, identity to the orbit to orbit angle 470 may be indicated.

Regarding c), when looking at Fig. 16, the identity may indicate that a phase shift (phase difference) between two satellites 520 and 540 in one orbit 502 is twice as large as a phase shift (phase difference) 570 between the first satellite 510 in an orbit 501 neighboring to the one orbit 502 and a satellite 520 closest to said first satellite in the one orbit

It is noted that the signaling of phase shift may imply some degree of parallelism of the satellite configurations in different orbits in which the first satellite and the second satellite are respectively located, as discussed above with reference to Fig. 16.

As mentioned above, the identity indication may be a binary flag (Boolean type of the corresponding field). However, the present disclosure is not limited to such signaling. The identity indication may be a a predefined value out of a value range of the second information element (such as the first or the last value of the range) or a predefined value out of a value range of the first information element. For the predefined value may be, e.g. 0xFFFFFFFF, at the end of the value range.

The above examples a), b), c) illustrated signaling identity of various difference parameters. However, the present disclosure is not limited thereto. In some systems, the satellites may be distributed uniformly or according to a predetermined pattern around the Earth. In such case, it may be more efficient to indicate the satellite distribution pattern features. For example, in an exemplary implementation of the signaling, the second information element indicates that satellites are uniformly distributed in the orbit of the first satellite. In addition or alternatively, the second information element may indicate that orbits of the satellites are uniformly distributed around the orbit of the first satellite. In addition or alternatively, the second information element may indicate that all satellites of the network have the same velocity.

In addition to a pattern indication, the pattern may be further quantified. For example, it may be indicated in the system information that a particular number of satellites is equidistantly distributed over a certain orbit, e.g. 18 satellites are distributed equally over orbit A, e.g. with 20°distance in angle between one another. In other words, the system information may specify a number of satellites relative to a serving or a reference satellite which share a certain pattern such as equal distribution resulting in the same angle between the neighboring satellites out of the number of satellites. Then, the angle between each two neighboring satellites may be once signaled for the same orbit. Accordingly, the signaling pertaining to the position of the individual neighboring satellites in the same orbit is not necessary at all.

### Signaling operational status of the satellites

In a satellite network, it may occur that some satellites are orbiting in expected positions, but are not operating. Especially in cases in which the satellite pattern is signaled (see preceding exemplary implementation of the signaling described above), UEs could expect that all equally distributed satellites or in general all satellites described by a pattern are operable. In order to enable indication of the operating satellites, said system information includes an indication of an operational status for a plurality of satellites including at least one of the first satellite and the second satellite.

In particular, the indication of the operational status is a bit sequence (can be referred to as a bitmap or a bit image register) in which each bit indicates for a respective satellite of said plurality of satellites whether or not the satellite is operational.

The bit image register may refer to the reference satellite (e.g. the satellite illuminating the serving cell) with its most significant bit. It may be possible not refer to the reference satellite in the bitmap at all in case it may be assumed that it is operational as soon as it is capable of transmitting the system information. For instance, in the above mentioned example of 18 satellites in the orbit, of which 16 are in operation and 2 are currently out-of-order, the binary representation (bitmap) may look as follows: 11 1101 1111 1011 1111. The zeros correspond to the satellites that are not operational and ones to those that are operational. The first bit (carrying value one) corresponds to the serving cell and the remaining 17 satellites are satellites in the same orbit listed sequentially in the direction of the velocity of the satellites in the orbit. However, this direction is only exemplary and the opposite direction may be selected instead.

### Exemplary implementation in RRC signaling

An exemplary second IE EphemerisDeltalnfo-r18 is shown below, including some of the elements (parameters) discussed above. EphemerisDeltalnfo-r18 refers to IE Ephemerislnfo-r17 of the reference (first) satellite.

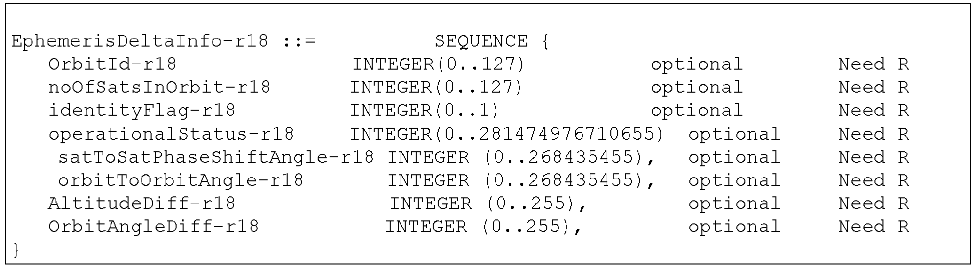

Parameter Orbitld-r18 identifies the orbit the subsequent information refers to. Setting 0x7F indicates that the information provided refers to multiple neighboring orbits.

Parameter noOfSatslnOrbit-r18 specifies the total number of satellites in the orbit identified with Orbitld-r18.

Parameter identityFlag-r18 indicates, when set to "1" that the following settings are the same for all satellites in
a) the same orbit: orbitld-r18, noOfSatslnOrbit-r18, operationalStatus-r18, satToSatPhaseShiftAngle-r18
b) a neighboring orbit: All elements besides the identityFlag-r18 itself.
c) Multiple neighboring orbits: orbitld-r18, noOfSatslnOrbit-r18, satToSatPhaseShiftAngle-r18, orbitToOrbitAngle-r18.

Parameter operationalStatus-r18 identifies the operational status of all satellites in the orbit identified with orbitld-r18. The value given is to be interpreted as a bit image register (BIR). Each bit setting to "1" identifies an operational satellite, each bit setting to "0" indicates a non-operational satellite. The most significant bit (msb) refers to the reference satellite, the next bit to the right indicates the status of the first neighboring satellite and so on.

Parameter satToSatPhaseShiftAngle-r18 specifies: In the same orbit case this element indicates the angle between a neighboring satellite and the reference satellite. The geocentre is the anchor point for this angle. In the neighboring orbit case this element indicates the phase difference between the reference satellite in the reference orbit and a neighboring satellite in a neighboring orbit. Taking the geocentre as the anchor point, this angle indication refers to the orthogonal projection of the reference satellite onto the named neighboring orbit and the position of the neighboring satellite to be described.

Parameter orbitToOrbitAngle-r18 specifies: In the neighboring orbit case this element indicates the angle between the reference orbit and the neighboring orbit to be described, taking the geocentre as its anchor point.

Parameter AltitudeDiff-r18 specifies: In the neighboring orbit case this element indicates the difference in altitude between the reference orbit and the neighboring orbit to be described here.

Parameter OrbitAngleDiff-r18 specifies: In the neighboring orbit case this element indicates any deviation from parallelism of the reference and the neighbouring orbit - if any.

In the following some exemplary usage of the EphemerisDeltalnfo-r18 parameter are illustrated. In a first example, if the first satellite and the second satellite are in the same orbit, the EphemerisDeltalnfo-r18 may have only the following elements:

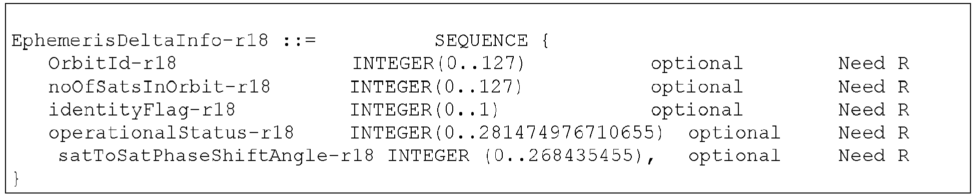

It is noted that the above mentioned parameters included in the EphemerisDeltalnfo-r18 in the first example do not need to be all included. For example, in case of identityFlag-18 set to 1, further parameters may be unnecessary if they were previously signaled for the serving satellite or another reference satellite. Thus, they may be absent from the EphemerisDeltalnfo-r18, to further reduce signaling overhead.

A second example shows a possible EphemerisDeltalnfo-r18 usage in a single neighboring orbit case:

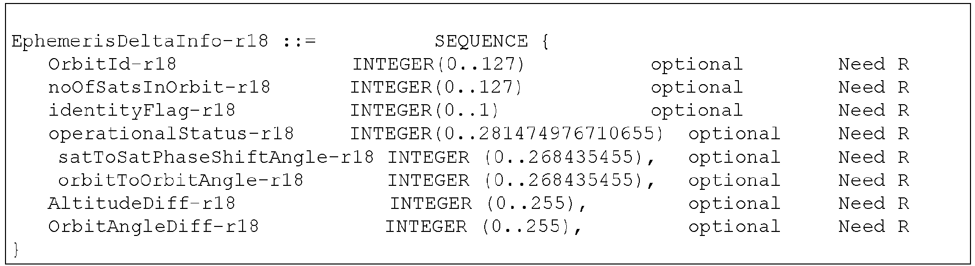

In this case, all parameters may be in use or some of them (e.g. in case of identity flag set to 1).

A third example shows a possible EphemerisDeltalnfo-r18 usage in a multiple neighboring orbits case:

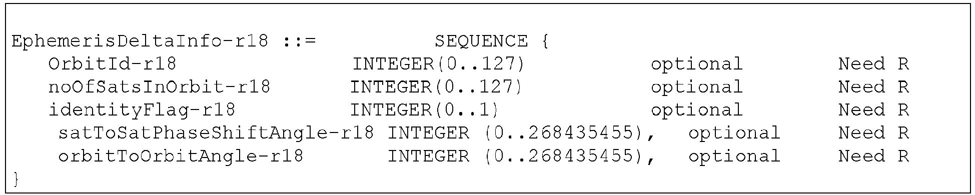

### Exemplary methods

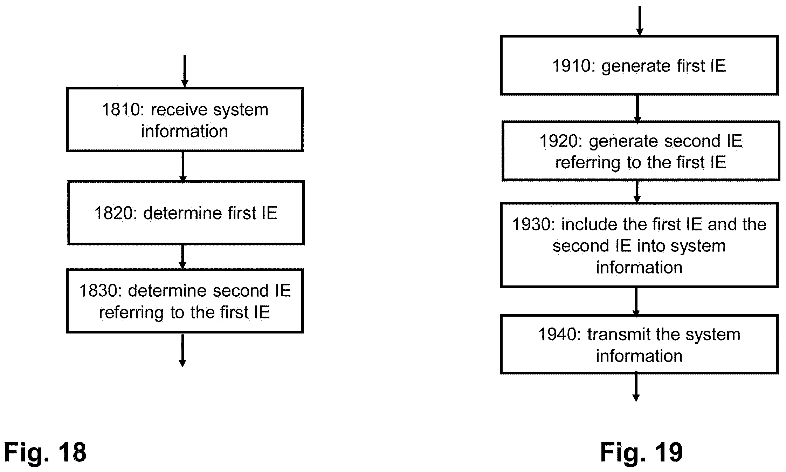

Correspondingly to the actions described as performed by the UE and the BS devices, methods are provided that can be performed by a terminal and a network node (access node, base station). The methods are illustrated in Figs. 18 and 19.

In particular, Fig. 18 shows a method for receiving system information regarding satellite configuration. The method may be performed e.g. by a terminal in a network including satellite cells. The method comprises a step 1810 of receiving system information. Moreover the method comprises a step 1820 of determining, from the system information, a first information element specifying a configuration parameter of a first satellite, and a step 1830 of determining, from the system information and with reference to the configuration parameter of the first satellite, a second information element specifying the configuration parameter of a second satellite different from the first satellite.

Fig. 19 illustrates a method for transmitting system information regarding satellite configuration. The method may be performed, e.g. at a base station or a similar access node or in a network node or the like. The method comprises generating (1910-1930) the system information and transmitting 1940 the generated system information. In particular, the generating of the system information comprises the steps of:
- Including 1930 into the system information a first information element specifying a configuration parameter of a first satellite,
- determining 1920, with reference to the configuration parameter of the first satellite, a second information element specifying the configuration parameter of a second satellite different from the first satellite, and
- including 1930 into the system information the second information element; and

The method may also include determining 1910 the first information element. Step 1910 may be perform anytime before steps 1920 and 1930 and is not necessarily part of the herein described method.

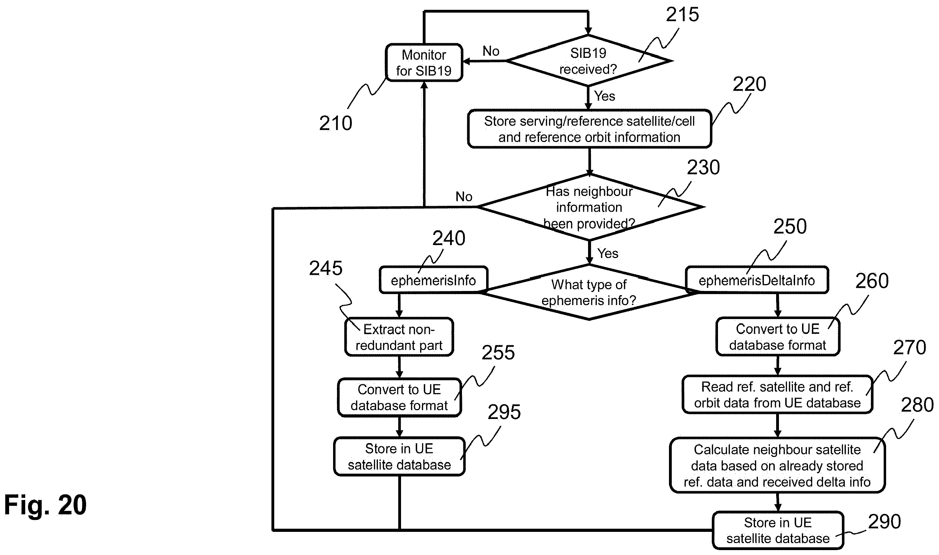

Fig. 20 shows an exemplary method for being performed at a UE. In particular, the UE monitors 210 system information for SIB19 (the system information block carrying information relates to the non-terrestrial network. If SIB19 is received ("yes" in step 215), in step 220, the UE extracts fro the SIB19 and stores information on the serving satellite (in general, serving cell or reference cell) and reference orbit information. Otherwise ("no" in step 215), the method returns back to step 210. In step 230 it is checked whether information on neighboring cells has been provided in the SIB19. If not ("no" in step 230), the method returns back to monitoring of system information in step 210. Otherwise, the method continues by distinguishing whether the received and stored information on neighboring cells (satellites) is a full ephemeris information 240 or an ephemeris information referring to information regarding another (reference) cell (see step 250).

In case the full ephemeris information is provided 240, the non-redundant part of the information is extracted in step 245, the extracted information is converted 255 to UE storage / database format and stored in step 295.

In case the delta ephemeris information is provided 250, the information is converted 260 to UE storage / database format. Then in step 270, a reference information is read from the UE database (storage). Step 280 calculates neighbor satellite data based on already stored reference data and the received delta information. Finally, the calculated neighbor satellite data is stored 290 in the UE database (storage).

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Summary of embodiments

According to a first aspect, a user equipment, UE, is provided, comprising a transceiver that, in operation, receives system information; and circuitry that, in operation, determines, from the system information, a first information element specifying a configuration parameter of a first satellite, and determines, from the system information and with reference to the configuration parameter of the first satellite, a second information element specifying the configuration parameter of a second satellite different from the first satellite.

According to a second aspect, further to the first aspect, the second information element specifies a difference between the configuration parameter of the first satellite and the configuration parameter of the second satellite.

According to a third aspect, further to the second aspect the first satellite and the second satellite share the same orbit, the configuration parameter is a satellite position, and the second information element includes a difference in angle between the first satellite and the second satellite with origin in geocentre.

According to a fourth aspect, further to the second or third aspect, the first satellite is in a first orbit and the second satellite is in a second orbit different from the first orbit and parallel to the second orbit, the configuration parameter is a satellite position, and the second information element includes a difference in angle between the first orbit and the second orbit with origin in geocentre.

According to a fifth aspect, further to the second to fourth aspect, the first satellite is in a first orbit and the second satellite is in a second orbit parallel with the first orbit and, the configuration parameter is a satellite position, and the second information element includes a difference in phase between the first satellite in the first orbit and a position obtained by orthogonal projection of the position of the second satellite in the second orbit onto the first orbit or a difference in phase between the second satellite in the second orbit and a position corresponding to orthogonal projection of the position of the first satellite in the first orbit onto the second orbit.

According to a sixth aspect, further to the first to fifth aspect, the second information element includes an indication specifying that the configuration parameter of the first satellite is the same as the configuration parameter of the second satellite.

According to a seventh aspect, further to the sixth aspect, the indication specifies at least one of: that an angle between two neighboring satellites in the same orbit is the same as an angle between the first satellite and the second satellite which are in the same orbit and neighboring; that an angle between two neighboring orbits is the same as an angle between a first orbit of the first satellite and a neighboring orbit of the second satellite; and that a phase shift between two satellites in one orbit is twice as large as a phase shift between the first satellite in an orbit neighboring to the one orbit and a satellite closest to said first satellite in the one orbit.

According to a seventh aspect, further to the sixth aspect, the indication is: a binary flag or a predefined value out of a value range of the second information element or or a predefined value out of a value range of the first information element.

According to a ninth aspect, further to the first or third aspect, the second information element indicates that satellites are uniformly distributed in the orbit of the first satellite.

According to a tenth aspect, further to the first to ninth aspect, said system information includes an indication of an operational status for a plurality of satellites including at least one of the first satellite and the second satellite.

According to an eleventh aspect, further to the tenth aspect, the indication of the operational status is a bit sequence in which each bit indicates for a respective satellite of said plurality of satellites whether or not the satellite is operational.

According to a twelfth aspect, a base station, BS, is provided, comprising: a transceiver that, in operation, transmits system information; and circuitry that, in operation, generates the system information comprising: including into the system information a first information element specifying a configuration parameter of a first satellite, determining, with reference to the configuration parameter of the first satellite, a second information element specifying the configuration parameter of a second satellite different from the first satellite, and including into the system information the second information element.

It is noted that the second to eleventh aspects also apply to the base station, since they define further signaling that is generated and transmitted by the base station and then received by the above described UE.

According to a thirteenth aspect, a method is provided for receiving system information regarding satellite configuration, the method comprising: receiving system information; determining, from the system information, a first information element specifying a configuration parameter of a first satellite, and determining, from the system information and with reference to the configuration parameter of the first satellite, a second information element specifying the configuration parameter of a second satellite different from the first satellite.

According to a fourteenth aspect, a method is provided for transmitting system information regarding satellite configuration, the method comprising: generating the system information comprising: including into the system information a first information element specifying a configuration parameter of a first satellite, determining, with reference to the configuration parameter of the first satellite, a second information element specifying the configuration parameter of a second satellite different from the first satellite, and including into the system information the second information element; and transmitting the system information.

It is noted that the second aspect to eleventh aspect also apply to the methods mentioned above, since they define further signaling that is generated and transmitted by the base station method and then received and used by the above described UE method.

According to a fifteenth aspect, a computer program is provided, stored on a computer readable non-transitory medium and comprising code instructions, which when executed on one or more processors, cause the one or more processors to perform steps according to any of methods mentioned above.

## Claims

1. A user equipment, UE, comprising:
a transceiver that, in operation, receives system information; and
circuitry that, in operation,
- determines, from the system information, a first information element specifying a configuration parameter of a first satellite, and
- determines, from the system information and with reference to the configuration parameter of the first satellite, a second information element specifying the configuration parameter of a second satellite different from the first satellite.

2. The UE according to claim 1, wherein
the second information element specifies a difference between the configuration parameter of the first satellite and the configuration parameter of the second satellite.

3. The UE according to claim 2, wherein
the first satellite and the second satellite share the same orbit,
the configuration parameter is a satellite position, and
the second information element includes a difference in angle between the first satellite and the second satellite with origin in geocentre.

4. The UE according to claim 2 or 3, wherein
the first satellite is in a first orbit and the second satellite is in a second orbit different from the first orbit and parallel to the second orbit,
the configuration parameter is a satellite position, and
the second information element includes a difference in angle between the first orbit and the second orbit with origin in geocentre.

5. The UE according to any of claims 2 to 4, wherein
the first satellite is in a first orbit and the second satellite is in a second orbit parallel with the first orbit and,
the configuration parameter is a satellite position, and
the second information element includes
- a difference in phase between the first satellite in the first orbit and a position obtained by orthogonal projection of the position of the second satellite in the second orbit onto the first orbit or
- a difference in phase between the second satellite in the second orbit and a position corresponding to orthogonal projection of the position of the first satellite in the first orbit onto the second orbit.

6. The UE according to any of claims 1 to 5, wherein
the second information element includes an indication specifying that the configuration parameter of the first satellite is the same as the configuration parameter of the second satellite.

7. The UE according to any of claim 6, wherein the indication specifies at least one of:
- that an angle between two neighboring satellites in the same orbit is the same as an angle between the first satellite and the second satellite which are in the same orbit and neighboring;
- that an angle between two neighboring orbits is the same as an angle between a first orbit of the first satellite and a neighboring orbit of the second satellite; and
- that a phase shift between two satellites in one orbit is twice as large as a phase shift between the first satellite in an orbit neighboring to the one orbit and a satellite closest to said first satellite in the one orbit.

8. The UE according to claim 6, wherein the indication is:
a binary flag or
a predefined value out of a value range of the second information element or
or a predefined value out of a value range of the first information element.

9. The UE according to claim 1 or 3, wherein the second information element indicates that satellites are uniformly distributed in the orbit of the first satellite.

10. The UE according to any of claims 1 to 9, wherein said system information includes an indication of an operational status for a plurality of satellites including at least one of the first satellite and the second satellite.

11. The UE according to claim 10, wherein the indication of the operational status is a bit sequence in which each bit indicates for a respective satellite of said plurality of satellites whether or not the satellite is operational.

12. A base station, BS, comprising:
a transceiver that, in operation, transmits system information; and
circuitry that, in operation, generates the system information comprising:
- including into the system information a first information element specifying a configuration parameter of a first satellite,
- determining, with reference to the configuration parameter of the first satellite, a second information element specifying the configuration parameter of a second satellite different from the first satellite, and
- including into the system information the second information element.

13. A method for receiving system information regarding satellite configuration, the method comprising:
receiving system information;
determining, from the system information, a first information element specifying a configuration parameter of a first satellite, and
determining, from the system information and with reference to the configuration parameter of the first satellite, a second information element specifying the configuration parameter of a second satellite different from the first satellite.

14. A method for transmitting system information regarding satellite configuration, the method comprising:
generating the system information comprising:
- including into the system information a first information element specifying a configuration parameter of a first satellite,
- determining, with reference to the configuration parameter of the first satellite, a second information element specifying the configuration parameter of a second satellite different from the first satellite, and
- including into the system information the second information element; and
transmitting the system information.

15. A computer program stored on a computer readable non-transitory medium and comprising code instructions, which when executed on one or more processors, cause the one or more processors to perform steps according to method 13 or 14.
